# DEMANDE DE BREVET EUROPEEN

(11) **EP 2 666 983 A1**
(43) Date de publication de la demande: **27.11.2013**
(21) Numéro de dépôt: 13163436.2
(22) Date de dépôt: 11.04.2013
(51) Int. Cl.: F01N 3/021, F01N 11/00, F01N 13/00, F01N 3/022

(54) **Filtre à particules muni d'un capteur de détection d'échauffement anormal et capteur de détection associé**

(30) Priorité: 24.05.2012 FR 1254745
(71) Demandeur: PEUGEOT CITROËN AUTOMOBILES SA, 78140 Velizy-Villacoublay (FR)
(72) Inventeur: Pradere, Xavier, 91570 BIEVRES (FR)

(57) **Abrégé**

L'invention porte sur un filtre (1) à particules destiné à être installé dans un circuit d'échappement d'un moteur thermique comportant un boîtier (3) métallique à l'intérieur duquel sont enfermés des cylindres en céramiques composés d'une multitude de canaux de faibles diamètres destinés à piéger des particules polluantes. Ce boîtier (3) métallique présente un cône (5) de sortie permettant son raccordement à un circuit d'échappement du véhicule. Conformément à l'invention, le filtre (1) comporte en outre un capteur (8) comprenant un filament (11) réalisé en matériau fusible à partir d'une température seuil susceptible d'entraîner un endommagement du cône (5) de sortie du filtre (1) à particules.

L'invention porte en outre sur le capteur (8) de détection associé.

## Description

L'invention se rapporte à un filtre à particules muni d'un capteur de détection d'un échauffement anormal ainsi que le capteur de détection associé.

L'invention trouve une application particulièrement avantageuse pour équiper les lignes d'échappement des véhicules thermiques, notamment de véhicules automobile, et de préférence pour équiper des moteurs de type diesel.

Les gaz d'échappement des moteurs thermiques comportent habituellement des éléments polluants et notamment des particules qui sont rejetées dans l'atmosphère. Afin de supprimer ces rejets, des filtres sont placés dans la ligne d'échappement des gaz pour bloquer les particules. Ces filtres à particules (FAP) sont généralement des cylindres en céramique composés d'une multitude de canaux de faibles diamètres (de l'ordre de la dizaine de microns), enfermés dans un boîtier métallique présentant un cône d'entrée et un cône de sortie permettant son raccordement à une ligne d'échappement. Les particules sont piégées dans ces canaux sous forme de suies ce qui a pour effet d'encrasser progressivement le filtre. Il est donc nécessaire de régénérer le filtre périodiquement. A cette fin, le filtre est chauffé afin de brûler les particules piégées. Une technique intéressante consiste à chauffer le filtre à l'aide des gaz d'échappement, en élevant la température de ces gaz.

Classiquement, pendant les phases de régénération, le surplus d'énergie à l'échappement nécessaire à l'élévation de température par rapport au fonctionnement normal du moteur est fourni par l'utilisation de post-injections, c'est-à-dire d'injections de carburant tardives, après le point mort haut du cycle, ou par une dégradation du rendement de la combustion, ou encore par une injection de carburant directement dans la ligne d'échappement.

Dans le cas de l'utilisation d'une post-injection celle-ci peut brûler totalement ou partiellement dans le moteur, générant une élévation de la température des gaz d'échappement ou, si elle est suffisamment tardive, entraîner une augmentation des quantités de CO et d'HC à l'échappement qui s'oxydent en arrivant sur le catalyseur d'oxydation afin de générer de la chaleur. C'est ce dernier phénomène qui est également mis en jeu si l'on effectue une introduction directe de carburant sous forme pulvérisé ou de vapeur dans la ligne d'échappement du moteur.

Cependant, les particules charbonnées piégées par le filtre sont des matières combustibles de sorte que leur combustion peut s'entretenir d'elle-même au-delà d'une température d'environ 450 °C si le fltre met en jeu un additif d'aide à la régénération, ou 600°C sinon, et dès lors que du comburant est disponible en quantité suffisante.

De l'oxygène étant généralement présent dans les gaz d'échappement des moteurs, la combustion des particules de suies peut ainsi s'emballer en cas de charge importante du filtre à particules en suies, menant à un dégagement important d'énergie dans le filtre, pouvant provoquer son endommagement, comme par exemple une fissure ou un perçage du cône de sortie du filtre à particules.

Un tel endommagement est préjudiciable à plus d'un titre. D'une part, l'efficacité du système de post-traitement est remise en cause, et d'autre part, selon les réglementations actuelles et à venir en matière de diagnostic embarqué, il est nécessaire de garantir l'efficacité des systèmes de post-traitement pendant une durée d'utilisation (typiquement 160000 km selon les normes EURO 5) ou de pouvoir alerter le conducteur d'un véhicule en cas de défaillance du système de post-traitement.

L'invention a pour but de proposer un système de conception simple permettant de détecter si un endommagement du filtre, en particulier au niveau du cône de sortie, est susceptible de s'être produit lors d'une régénération du filtre.

A cet effet, l'invention concerne un filtre à particules destiné à être installé dans un circuit d'échappement d'un moteur thermique comportant un boîtier métallique à l'intérieur duquel sont enfermés des cylindres en céramiques composés d'une multitude de canaux de faibles diamètres destinés à piéger des particules polluantes, ce boîtier métallique présentant un cône de sortie permettant son raccordement à un circuit d'échappement du véhicule **caractérisé en ce qu'il** comporte en outre un capteur comprenant un filament réalisé en matériau fusible à partir d'une température seuil susceptible d'entraîner un endommagement du cône de sortie du filtre à particules.

Selon une réalisation, la température seuil est comprise entre 1050 et 1100 degrés Celsius.

Selon une réalisation, le capteur est positionné à l'intérieur du cône de sortie.

Selon une réalisation, le filament est réalisé dans le même matériau que le matériau constituant le cône de sortie.

Selon une réalisation, le filament du capteur est réalisé en acier.

Selon une réalisation, le cône de sortie présente une double peau.

Selon une réalisation, le capteur comporte un système de traitement apte à déterminer l'état du filament en faisant circuler un courant dans ledit filament.

L'invention concerne en outre un capteur de détection d'un échauffement anormal d'un filtre à particules **caractérisé en ce qu'il** comprend un filament réalisé en matériau fusible à partir d'une température seuil susceptible d'entraîner un endommagement d'un cône de sortie du filtre à particules.

Selon une réalisation, la température seuil est comprise entre 1050 et 1100 degrés Celsius.

Selon une réalisation, le filament est réalisé dans le même matériau que le matériau constituant le cône de sortie du filtre à particules.

Selon une réalisation, le filament du capteur est réalisé en acier.

Selon une réalisation, le capteur comporte un système de traitement apte à déterminer l'état du filament en faisant circuler un courant dans ledit filament.

L'invention sera mieux comprise à la lecture de la description qui suit et à l'examen des figures qui l'accompagnent. Ces figures ne sont données qu'à titre illustratif mais nullement limitatif de l'invention.

La figure 1 montre une représentation schématique d'un filtre à particules selon l'invention.

Les figures 2a et 2b montrent des représentations schématiques d'un capteur de détection selon l'invention respectivement dans un état intègre et dans un état détérioré suite à un échauffement anormal du filtre à particules.

Les éléments identiques, similaires ou analogues conservent la même référence d'une figure à l'autre.

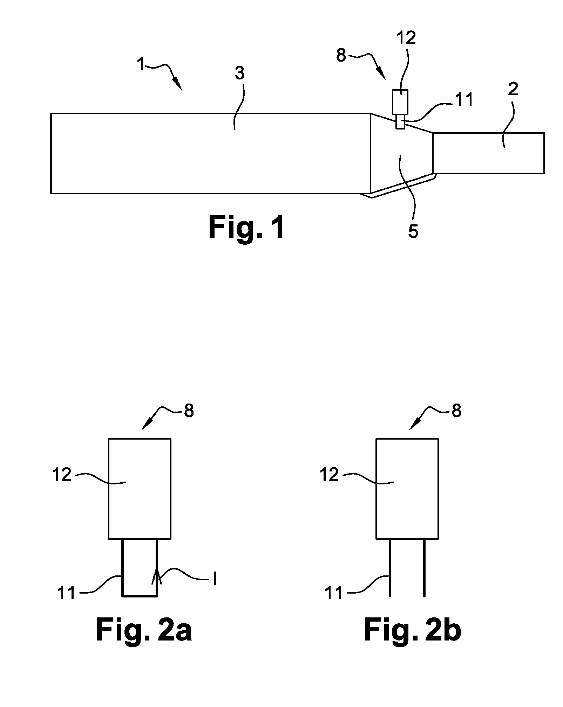

La figure 1 montre un filtre 1 à particules (FAP) inséré dans un circuit 2 d'échappement d'un moteur thermique par exemple de type diesel. Ce filtre 1 à particules assure une fonction de dépollution des gaz d'échappement du moteur thermique du véhicule automobile.

A cet effet, le filtre 1 comporte un boîtier métallique 3 à l'intérieur duquel sont enfermés des cylindres en céramiques composés d'une multitude de canaux de faibles diamètres (de l'ordre de la dizaine de microns) destinés à piéger les particules polluantes issues de la combustion du carburant du moteur.

Le boîtier 3 présente un cône d'entrée (non représenté) et un cône de sortie 5 permettant son raccordement au circuit 2 d'échappement.

Le filtre 1 comporte en outre capteur 8 de détection d'un échauffement anormal du filtre à particules. Ce capteur 8 comprend un filament 11 réalisé en matériau fusible à partir d'une température seuil susceptible d'entraîner un endommagement du cône 5 de sortie. La température seuil est comprise entre 1050 et 1100 degrés Celsius. Dans un exemple de réalisation, le filament 11 présente un diamètre compris entre 1 et 2 millimètres.

Le capteur 8 est installé à proximité du cône 5 de sortie. De préférence, le capteur 8 est positionné à l'intérieur du cône 5 de sortie. De préférence, le filament 11 est réalisé dans le même matériau que le matériau qui constitue le cône 5 de sortie. Ainsi, en cas d'échauffement anormal entraînant la fusion du cône 5, le filament 11 va également entrer en fusion et se détériorer. Dans un exemple, le filament 11 est ainsi réalisé en acier.

Le capteur 8 comporte en outre un système 12 de traitement apte à faire circuler un courant électrique I dans le filament 11 pour déterminer l'état du filament 11. Ainsi, lorsque le système 12 détecte qu'un courant circule dans le filament 11, cela signifie que le filament 11 (et donc le filtre 1) est intègre (cf. figure 2a). Tandis que lorsque le système 12 détecte que le courant ne circule plus dans le filament 11, cela signifie que le filament 11 (et donc a priori le cône 5 de sortie de filtre 1) a été détérioré lors d'une régénération du filtre 1 qui s'est produite dans des conditions anormales de température, le circuit dans lequel circule le courant I ayant été ouvert suite à la fusion du filament (cf. figure 2b).

Pour signaler la fusion du filament 11, un signal binaire de type 0 ou 1 pourra être envoyé à un superviseur du véhicule (non représenté) dès que la fusion du filament 11 aura été détectée par le système 12 de traitement, aucun signal ou un signal de valeur différente étant envoyé tant que le filament 11 est intègre.

L'invention est particulièrement avantageuse lorsqu'elle est mise en oeuvre avec un filtre 1 à particules comportant un cône 5 de sortie ayant une double peau. En effet, dans ce cas, il est possible de savoir que la première peau du cône 5 a été endommagée lorsque la fusion du filament 11 aura été détectée par le système 12 de traitement.

Différentes variantes de configuration du capteur selon l'invention sont envisageables. Selon une variante, le système 12 de traitement peut ainsi être déporté dans un superviseur du véhicule, seul le filament 11 étant présent au niveau du filtre 1 à particules. Selon une autre variante, cumulative avec la précédente, le filament 11 est réalisé dans un matériau autre que l'acier et ayant une température de fusion correspondant à la température d'échauffement anormal susceptible d'entraîner un endommagement du filtre à particules 1.

## Revendications

1. Filtre (1) à particules destiné à être installé dans un circuit d'échappement d'un moteur thermique comportant un boîtier (3) métallique à l'intérieur duquel sont enfermés des cylindres en céramiques composés d'une multitude de canaux de faibles diamètres destinés à piéger des particules polluantes, ce boîtier (3) métallique présentant un cône (5) de sortie permettant son raccordement à un circuit d'échappement du véhicule **caractérisé en ce qu'il** comporte en outre un capteur (8) comprenant un filament (11) réalisé en matériau fusible à partir d'une température seuil susceptible d'entraîner un endommagement du cône de sortie du filtre (1) à particules.

2. Filtre à particules selon la revendication 1, **caractérisé en ce que** la température seuil est comprise entre 1050 et 1100 degrés Celsius.

3. Filtre à particules selon la revendication 1 ou 2, **caractérisé en ce que** le capteur (8) est positionné à l'intérieur du cône (5) de sortie.

4. Filtre à particules selon l'une des revendications 1 à 3, **caractérisé en ce que** le filament (11) est réalisé dans le même matériau que le matériau constituant le cône (5) de sortie.

5. Filtre à particules selon l'une des revendications 1 à 4, **caractérisé en ce que** le filament (11) du capteur est réalisé en acier.

6. Filtre à particules selon l'une des revendications 1 à 5, **caractérisé en ce que** le cône (5) de sortie présente une double peau.

7. Filtre à particules selon l'une des revendications 1 à 6, **caractérisé en ce que** le capteur (8) comporte un système (12) de traitement apte à déterminer l'état du filament (11) en faisant circuler un courant dans ledit filament (11).

8. Capteur (8) de détection d'un échauffement anormal d'un filtre (1) à particules **caractérisé en ce qu'il** comprend un filament (11) réalisé en matériau fusible à partir d'une température seuil susceptible d'entraîner un endommagement du filtre (1) à particules.

9. Capteur selon la revendication 8, **caractérisé en ce que** la température seuil est comprise entre 1050 et 1100 degrés Celsius.

10. Capteur selon la revendication 8 ou 9, **caractérisé en ce que** le filament (11) est réalisé dans le même matériau que le matériau constituant un cône (5) de sortie du filtre à particules.

11. Capteur selon l'une des revendications 8 à 10, **caractérisé en ce que** le filament (11) du capteur est réalisé en acier.

12. Capteur selon l'une des revendications 8 à 11, **caractérisé en ce qu'il** comporte un système (12) de traitement apte à déterminer l'état du filament (11) en faisant circuler un courant dans ledit filament (11).
